(19) Europäisches Patentamt
European Patent Office
Office européen des brevets

(11) Publication number: 0 281 425 A2

(12) # EUROPEAN PATENT APPLICATION

(21) Application number: 88301944.0

(22) Date of filing: 04.03.88

(51) Int. Cl.[4]: C 07 F 7/18
C 07 F 7/08

(30) Priority: 06.03.87 IT 4100387

(43) Date of publication of application:
07.09.88 Bulletin 88/36

(84) Designated Contracting States:
AT BE DE ES FR GB NL SE

(71) Applicant: ISTITUTO GUIDO DONEGANI S.p.A.
Via Caduti del Lavoro
I-28100 Novara (IT)

(72) Inventor: Gementi, Francesco
9, via Pergolesi
I-20052 Monza Milan (IT)

Sogli, Loris
2, via Ragazzi del 99
I-28100 Novara (IT)

Ungarelli, Raffaele
1, via Tanaro
I-28069 Trecate Novara (IT)

(74) Representative: Whalley, Kevin et al
MARKS & CLERK 57/60 Lincoln's Inn Fields
London WC2A 3LS (GB)

(54) **A process for producing a silanic or siloxanic compound containing at least one cycloalkylic ring.**

(57) A process for producing a silanic or siloxanic compound containing at least one cycloalkylic ring by hydrogenation of a corresponding particularly defined derivative containing at least one aromatic ring in the presence of a Raney nickel catalyst modified with chromium.

EP 0 281 425 A2

**Description**

"A PROCESS FOR PRODUCING A SILANIC OR SILOXANIC COMPOUND CONTAINING AT LEAST ONE CYCLOAKLYLIC RING"

This invention relates to a process for producing a silanic or siloxanic compound containing at least one cycloalkylic ring.

The present invention particularly relates to a process for producing a silanic or siloxanic compound containing at least one cycloalkylic ring by catalytic hydrogenation of a corresponding derivative containing at least one aromatic or heteroaromatic ring of formula (I):

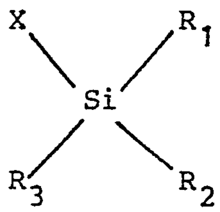

(I)

wherein:

- X is an aryl, alkylaryl or arylalkyl group, having from 6 to 20 carbon atoms, optionally containing, in the chain or in the ring, at least one heteroatom selected from oxygen, sulphur and nitrogen and, optionally, at least one halogen atom in place of a hydrogen atom, or the radical:

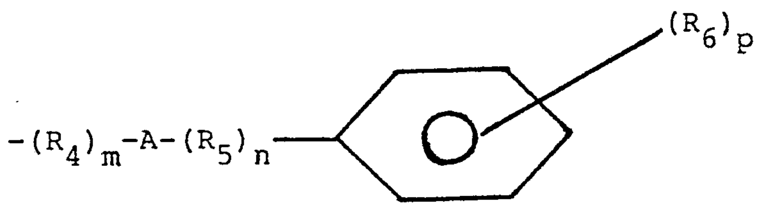

wherein $R_4$ and $R_5$, which may be the same or different, are alkylenic radicals containing from 1 to 20 carbon atoms, $R_6$ is an alkyl, alkoxyl, alcoholic, acid or ester radical containing from 1 to 20 carbon atoms, A is a heteroatom of the kind as set forth hereinbefore, and m, n and p are zero or a whole number ranging from 1 to 10;

- $R_1$, $R_2$ and $R_3$, which may be the same or different, may have the same meaning as X or they may be hydrogen atoms, an alkyl, an alkoxy or an alkylene radical containing from 1 to 20 carbon atoms, a linear or branched alkyl radical having from 1 to 20 carbon atoms and containing one or more alkoxyl, carbonyl or carboxyl groups, or a $N(R')_2$ group, in which R′ is a hydrogen atom or an alkyl radical containing from 1 to 20 carbon atoms.

The catalytic hydrogenation of tolyl-triethoxy-silane having formula (II):

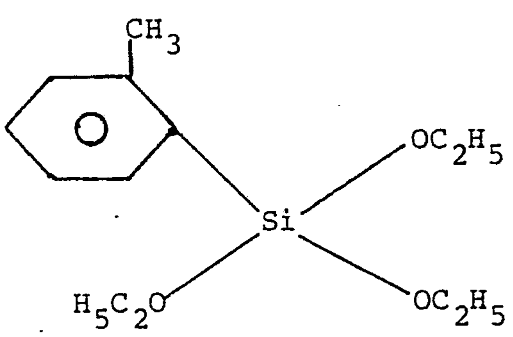

(II)

is known from the Journal of the American Chemical Society vol. 84, May 20, 1962, pages 1856-1868. Such hydrogenation is carried out in the presence of a Raney nickel catalyst at temperatures ranging from 95 to 105°C over 16 hours, at a pressure of 1.000 p.s.i., thereby obtaining a yield of 54%.

This process is not acceptable industrially as far as the yield and productivity are concerned and owing to the high pressure necessary for carrying out the hydrogenation. Moreover, it is noted that the yield level decreases to even lower values in the case of hydrogenation of some aryl alkoxy-silanes, highly useful from an industrial point of view, by using the same operating conditions, described in the above mentioned publication. Moreover, it was virtually impossible, until now, to avoid a massive hydrogenolysis of the carbon-silicon bonds.

We have now found that there is a particular kind of catalyst, leading to excellent, quite unexpected yields,

not only in the case of tolyl-triethoxy-silane of formula (II), but also in the case of silanic or siloxanic compounds of formula (I), which, until now, could not be hydrogenated, or were hydrogenated only in negligible yields, with considerable losses owing to hydrogenolysis and under burdensome operating conditions.

Accordingly the present invention provides a process for producing a silanic or siloxanic compound, containing at least one cycloalkylic ring by catalytic hydrogenation of a corresponding derivative of formula (I), wherein the catalyst is a Raney nickel modified with chromium.

The chromium content in the Raney nickel is preferably equal to or greater than 0.1% by weight, more preferably from 1 to 10%, still more preferably from 2 to 5%, with reference to nickel.

This kind of nickel-chromium catalyst is described, for instance, in U.S Patent Nos. US-A-3,821,305 and 2,502,348, and is commercially available for instance as "Raney 2400 Chromium promoted nickel" produced by the Grace Company - USA.

According to the process of the present invention, the hydrogenation is preferably carried out in the presence of an organic solvent, more preferably an apolar solvent, for instance a saturated hydrocarbon, such as n-hexane or cyclohexane, the solvent amount preferably ranging generally from 0.1 to 10 kg per kg of substrate, that has to be hydrogenated.

The catalyst amount to be used in the process of the present invention is not critical and can range from 5 to 500 mg per kg of substrate.

According to a preferred embodiment, the hydrogenation is carried out at temperatures ranging from 50° C to 150 °C, at pressures ranging from 5 to 100 bar, more preferably from 10 to 20 bar, and with a reaction time ranging from 0.5 to 50 hours, more preferably from 1 to 20 hours.

The importance of the invention is particularly apparent considering that the cycloalkyl derivatives of silanes and siloxanes were obtained, until now, industrially through a complicated process, that used cyclohexene, as starting raw material; see Journal of Organometallic Chemistry - Vol. 121 (1976) page 40.

Examples of silanes and siloxanes, which can be obtained by the process of the present invention, are the following:

- (cyclohexyl)-Si-$(OCH_3)_3$;
- $(cyclohexyl)_2$-Si-$(OCH_3)_2$;

- 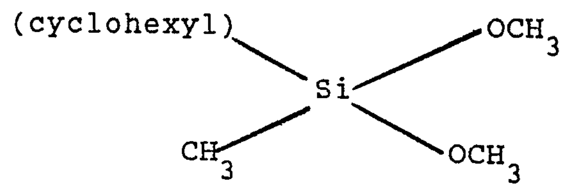

- (cyclohexyl)-Si-$(OC_2H_5)_3$;
- $(cyclohexyl)_2$-Si-$(OC_2H_5)_2$;

- 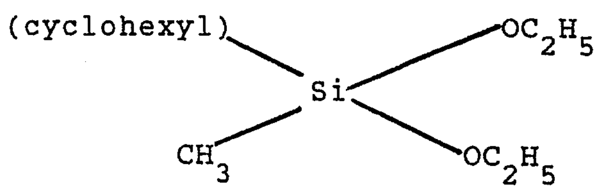

- 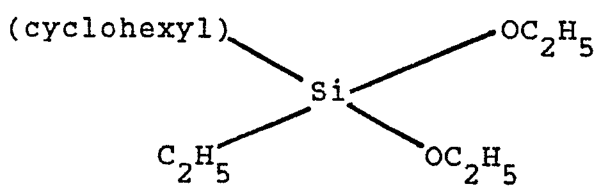

- 1,3-dicyclohexyl-tetramethyl-disiloxane;
- tetracyclohexyl-oxysilane;
- tetracyclohexyl-silane.

Silanes and siloxanes obtained according to the process of the present invention may be used advantageously for preparing catalysts for olefin polymerization.

The invention will be further described with reference to the following specific Examples.

EXAMPLES 1-4

An amount, as set forth in Table 1, of a Raney nickel-chromium catalyst, sold by Grace Company under the name "Raney 2400 chromium promoted nickel", containing 2-3% by weight of chromium, was loaded, in the form of a suspension in a solvent at 30% by weight, into an autoclave having a volume of 500 $cm^3$. There was then added methyl-phenyl-dimethoxy-silane in the amount as set forth in the Table, and the solvent until its volume reached 200 $cm^3$. The mixture was heated gradually over one hour, under strong stirring, at the temperature and hydrogen pressure as set forth in Table 1. After the reaction times, indicated hereinbefore, the hydrogenation was practically over. The final mass was cooled, the catalyst was separated by decantation and filtration and thus the solvent was evaporated. Methyl-cyclohexyl-dimethoxy-silane was obtained, having a purity degree of 99.6% and in the amount and with yields as set forth in Table 1

TABLE 1

| EXAMPLES | 1 | 2 | 3 | 4 |
|---|---|---|---|---|
| Catalyst (g) | 34 | 23 | 23 | 48 |
| Methyl-phenyl-dimethoxy--silane (MPDS); (g) | 150 | 133 | 130 | 200 |
| Solvent | n-hexane | n-hexane | n-hexane | methanol |
| T (°C) | 90-95 | 90 | 90-95 | 94-107 |
| Pressure $H_2$ (bar) | 12-16 | 16 | 50 | 16-60 |
| Ratio Catalyst/MPDS (g/kg) | 227 | 174 | 173 | 240 |
| Ratio Solvent/MPDS (kg/kg) | 0.9 | 0.9 | 0.9 | 1.2 |
| Time (hours) | 4 | 6 | 3 | 19 |
| Methyl-cyclohexyl-dime=thoxy-silane (g) | 132.3 | 131 | 107.4 | 154.3 |
| Yield | 85% | 95% | 80% | 75% |

EXAMPLES 5-6

Example 1 was repeated, replacing methyl-phenyl-dimethoxy-silane by diphenyl-demethoxy-silane. The operative conditions and the obtained results are set forth in Table 2.

TABLE 2

| EXAMPLES | 5 | 6 |
|---|---|---|
| Catalyst (g) | 22 | 12 |
| Diphenyl-dimethoxy-silane (DMPS) (g) | 163 | 170 |
| Solvents | n. hexane | n. hexane |
| T (°C) | 84-94 | 92-94 |
| Pressure $H_2$ (bar) | 10-20 | 16-20 |
| Ratio catalyst/DMPS (g/kg) | 137 | 68 |
| Ratio solvent/DMPS (kg/kg) | 0.8 | 0.8 |
| Time (hours) | 3 | 7 |
| Dicyclohexyldimethoxy-silane (g) | 166.6 | 171.2 |
| Yield | 95% | 93% |

**Claims**

1. A process for producing a silanic or siloxanic compound containing at least one cycloalkylic ring by catalytic hydrogenation, characterized by subjecting to hydrogenation, in the presence of a Raney nickel catalyst modified with chromium, a corresponding silanic or siloxanic compound containing at least one aromatic or heteroaromatic ring of formula (I):

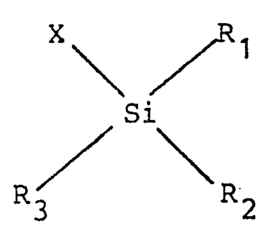

(I)

wherein:
- X is an aryl, alkylaryl or arylalkyl group having from 6 to 20 carbon atoms, optionally containing, in the chain or in the ring, at least one heteroatom selected from oxygen, sulphur and nitrogen and, optionally, at least one halogen atom in place of a hydrogen atom; or the radical

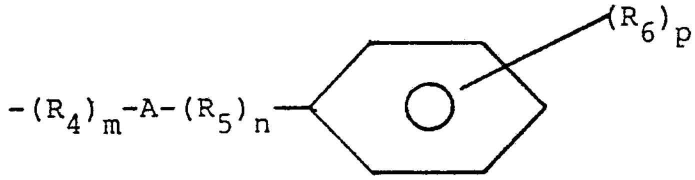

wherein $R_4$ and $R_5$, which may be the same or different, are an alkylene radical containing from 1 to 20 carbon atoms, $R_6$ is an alkyl, alkoxyl, alcoholic, acid or ester radical containing from 1 to 20 carbon atoms, A is a heteroatom of the kind as set forth hereinbefore, and m, n and p are zero or a whole number ranging from 1 to 10; and

$R_1$, $R_2$ and $R_3$, which may be the same or different, may have the same meaning as X, or may be hydrogen atoms, an alkyl, an alkoxyl or an alkylene radical containing from 1 to 20 carbon atoms, or a linear or branched alkyl radical having from 1 to 20 carbon atoms and containing one or more alkoxyl, carbonyl or carboxyl groups or a $N(R')_2$ group, in which R′ is a hydrogen atom or an alkyl radical containing from 1 to 20 carbon atoms.

2. A process as claimed in claim 1, characterized in that the chromium content in the Raney nickel catalyst is equal to or greater than 0.1%, with reference to nickel.

3. A process as claimed in claim 2, characterized in that the chromium content is from 1 to 10% by weight, preferably from 2 to 5% by weight, with reference to nickel.

4. A process as claimed in any of claims 1 to 3, characterized in that the amount of the used catalyst is from 5 to 500 g per Kg of substrate.

5. A process as claimed in any of claims 1 to 4, characterized in that the hydrogenation is carried out in the presence of an organic, preferably an apolar, solvent and in that the solvent amount is from 0.1 to 10 kg per kg of substrate, that has to be hydrogenated.

6. A process as claimed in claim 5, characterized in that the solvent is n-hexane or cyclohexane.

7. A process as claimed in any of claims 1 to 6, characterized in that the hydrogenation is carried out at a temperature from 50 to 150° C.

8. A process as claimed in any of claims 1 to 7, characterized in that the hydrogenation is carried at a hydrogen pressure from 5 to 100 bar, preferably from 10 to 20 bar.

9. A process as claimed in any of claims 1 of 8, characterized in that the reaction time is from 0.5 to 50 hours, preferably from 1 to 20 hours.

10. A silanic or siloxanic compound containing at least one cycloalkylic ring, obtained by hydrogenation, in the presence of a Raney nickel catalyst modified with chromium, of a corresponding silanic or siloxanic compound of formula (I) as defined in claim 1.